Europäisches Patentamt

European Patent Office

Office européen des brevets

(19)

(11) **EP 1 038 268 B1**

(12) **FASCICULE DE BREVET EUROPEEN**

(45) Date de publication et mention
de la délivrance du brevet:
**26.02.2003 Bulletin 2003/09**

(21) Numéro de dépôt: **98958331.5**

(22) Date de dépôt: **04.12.1998**

(51) Int Cl.$^7$: **G06T 5/20**

(86) Numéro de dépôt international:
**PCT/FR98/02627**

(87) Numéro de publication internationale:
**WO 99/030279 (17.06.1999 Gazette 1999/24)**

(54) **PROCEDE DE CORRECTION DU NIVEAU DE BRUIT D'UN DETECTEUR D'IMAGE NUMERISEE**

VERFAHREN ZUR KORREKTUR DES GERÄUSCHPEGELS EINES NUMERISCHEN BILDDETEKTORS

METHOD AND APPARATUS FOR CORRECTING THE NOISE LEVEL OF A DIGITAL IMAGE DETECTOR

(84) Etats contractants désignés:
**DE FR NL**

(30) Priorité: **09.12.1997 FR 9715554**

(43) Date de publication de la demande:
**27.09.2000 Bulletin 2000/39**

(73) Titulaire: **Trixell S.A.S.**
**38430 Moirans (FR)**

(72) Inventeur: **DUCOURANT, Thierry,**
**Thomson-CSF PI, Dépt. Brevets**
**94117 Arcueil Cedex (FR)**

(74) Mandataire: **Guérin, Michel**
**THALES Intellectual Property,**
**13, Avenue du Président Salvador Allende**
**94117 Arcueil Cédex (FR)**

(56) Documents cités:
**EP-A- 0 673 149**       **US-A- 4 802 012**
**US-A- 5 231 503**

## Description

La présente invention concerne un procédé de correction de niveau de bruit. Elle s'applique aux détecteurs d'image du type dans lequel l'acquisition des images s'effectue par une matrice de points photosensibles. Le procédé de l'invention a plus particulièrement pour but de réduire la perception de bruits qui sont en corrélation entre tous les points photosensibles d'une même ligne.

Des matrices de points photosensibles sont couramment utilisées dans les techniques d'acquisition d'images, où elle permettent d'obtenir des images numérisées. Dans ces matrices photosensibles, les points photosensibles sont réalisées notamment à l'aide de techniques de dépôts en films minces de matériaux semi-conducteurs. Ces matrices photosensibles permettent de détecter des images contenues dans un rayonnement visible ou proche du visible. Il est à noter qu'elles trouvent une application particulièrement intéressante dans la détection d'images radiographiques ; il suffit à cet effet d'interposer un écran scintillateur entre le rayonnement X incident et la matrice photosensible, pour convertir le rayonnement X en un rayonnement dans la bande de longueurs d'onde auxquelles sont sensibles les points photosensibles.

On trouve des matrices photosensibles de grandes dimensions (par exemple 50 cm x 50 cm), qui peuvent avoir jusqu'à plusieurs millions de points photosensibles ou pixels. Les points photosensibles forment un réseau de lignes et de colonnes. Une matrice photosensible, du type dont chaque point phdtosensible comprend une photodiode coopérant avec un élément interrupteur constitué par une diode de commutation, est décrite avec son mode de fonctionnement ainsi qu'une manière de la réaliser, dans une demande de brevet français n° 86.14.058 (n° de publication 2.605.166).

Lors de l'exposition de la matrice à une information lumineuse, des quantités de charges sont engendrées et accumulées par chacun des points photosensibles, en fonction de l'intensité du signal auquel il a été exposé. Une lecture de ces quantités de charges est opérée, ligne par ligne. Elle consiste notamment dans un premier temps à transporter les charges accumulées par chacun des points photosensibles de la ligne adressée, vers des circuits de lecture en colonne, par l'intermédiaire de conducteurs parallèles aux colonnes. Puis, des circuits de multiplexage permettent ensuite de transférer ces quantités de charge, sous la forme de valeurs de mesure, vers un circuit d'acquisition de données où elles sont stockées et traitées.

D'une manière générale quel que soit le mode de fonctionnement de la matrice, à chaque valeur de mesure est superposé un niveau de bruit, dont l'origine est notamment le bruit dont sont affectés les différents organes électroniques qui interviennent dans la lecture, notamment les circuits d'adressage ligne et les circuit de lecture en colonnes.

Par le terme "bruit" on entend que la valeur de mesure Vm, délivrée par chaque point photosensible, ne peut être reproduite qu'avec une certaine erreur ou fluctuation statistique caractérisée par son écart-type.

Il est bien connu que dans des détecteurs d'image du type à matrice photosensible, une densité non nulle de bruit à des fréquences inférieures à la fréquence de l'adressage ligne (la fréquence ligne est l'inverse du temps alloué à la lecture des points photosensibles d'une même ligne), entraîne que tous les points photosensibles de cette ligne sont affectés d'un même bruit : ce bruit est alors appelé "bruit corrélé en ligne" Bcl.

Il est bien connu également que l'oeil est particulièrement performant pour détecter, sur une image, tous les phénomènes corrélés. Ceci rend le bruit corrélé en ligne Bcl particulièrement redoutable, car il est détectable même à très faibles niveaux. On considère généralement, que par rapport à des bruits non corrélés Bnc dont le niveau correspond à la limite de la perception par l'oeil, un bruit corrélé Bcl est encore parfaitement détectable par l'oeil, quand il possède un niveau de l'ordre de 10 fois inférieur à celui des bruits non corrélés.

A ce problème qui résulte de l'accroissement de la capacité de perception de l'oeil aux fluctuations corrélées, une solution classique est apportée par une méthode de correction du bruit appelée technique de "clamp" ; dans cette méthode, on détermine la valeur VBcl du bruit corrélé Bcl présent sur une ligne donnée, pour la soustraire de la valeur de mesure Vm délivrée par chacun des points photosensibles de cette ligne (Vm - Vbcl). A cet effet, cette méthode consiste notamment à lire une valeur Vob dite d'obscurité (qui contient le bruit corrélé en ligne), délivrée par un point photosensible appartenant à la ligne et laissé délibérément dans l'obscurité. Ceci est obtenu en protégeant le point photosensible de toute exposition à une information lumineuse ; ce point remplit ainsi uniquement une fonction de correction, et il est appelé "point correcteur" dans la suite de la description. Les autres points photosensibles destinés à être exposés à des informations lumineuse en vue de détecter une image, sont appelés "points détecteurs".

Cependant, si la valeur d'obscurité Vob d'un tel point photosensible contient effectivement l'information du bruit corrélé en ligne Bcl, elle possède également un certain niveau de bruit non corrélé Bnc ; la valeur d'obscurité Vob est en fait la somme quadratique des bruits corrélés Bcl et non corrélés Bnc. Aussi, en vue de fournir une valeur de correction présentant un niveau de bruits non corrélés Bnc réduit, on alloue plus qu'un unique point correcteur, soit n points correcteurs, à la fonction de correction du bruit corrélé en ligne Bcl. Dans ces conditions, une valeur de correction Vc finalement obtenue par la moyenne des valeurs d'obscurité Vob de ces n points correcteurs, est représentative du niveau de bruit corrélé Bcl, alors que les bruits non corrélés Bnc ont été statistiquement d'autant plus réduits que le nombre n des points correcteurs est grand. Plus précisément le niveau de bruit résiduel non corrélé est réduit par un facteur égal à la racine du nombre n de points correcteurs ($Vc = Bcl + Bnc/\sqrt{n}$).

Lorsque la valeur de mesure VM de chacun des points détecteurs de la ligne est corrigée par la valeur de correction Vc, le bruit corrélé en ligne Bcl d'origine est éliminé, mais il est remplacé par un autre bruit Bcl' injecté par la correction elle-même. Ce bruit Bcl' est le bruit résiduel non corrélé qui lui-même devient corrélé en ligne par le fait même qu'il est présent sur tous les points détecteurs. Ce nouveau bruit corrélé en ligne Bcl' a donc une amplitude égale à celle du bruit résiduel non corrélé, soit $Bnc/\sqrt{n}$. Dans ces conditions, si l'on veut conférer à ce nouveau bruit corrélé Bcl' un niveau inférieur à celui auquel il est perçu, en respectant la règle suivant laquelle un bruit corrélé doit être inférieur à au moins 10 fois le bruit non corrélé, il faut que $\sqrt{n}=10$, et donc que n=100 (n étant le nombre des points correcteurs de la ligne).

Cette solution procure de bons résultats quand à la perception du bruit par l'oeil, mais elle est très pénalisante du fait du nombre n élevé ($n \geq 100$) de points correcteurs qu'elle exige pour chaque ligne. En effet, le nombre élevé de points correcteurs non seulement augmente le coût, mais il augmente l'encombrement pour une même surface destinée à la détection d'image, puisque pour chaque ligne, ces 100 détecteurs correcteurs doivent être laissés dans l'obscurité.

Par ailleurs, DI = EP-A-673 149 divulgue une méthode de correction de niveau de bruit dans un détecteur d'images comportant une matrice de points photosensibles.

La présente invention a pour but de réduire voire de supprimer la perception par l'oeil des bruits corrélés en ligne dans un détecteur d'image. Elle propose de corriger les valeurs de mesure délivrées par les points détecteurs d'une manière telle qu'elle permet, pour une même perception par l'oeil, d'obtenir les valeurs nécessaires à ces corrections avec un nombre de points correcteurs considérablement réduit par rapport à l'art antérieur. L'invention est définie dans la revendication 1 ci-jointe.

Suivant l'invention, un procédé de correction du niveau de bruit dans un détecteur d'images comportant une matrice de points photosensibles agencés en au moins une ligne et en au moins une colonne, les points photosensibles étant dans chaque ligne partagés, d'une part en des points dit "détecteurs" destinés chacun à être exposés à une information lumineuse à détecter et à délivrer une valeur de mesure qui est fonction de l'intensité de l'information lumineuse, et partagés d'autre part, en des points dits "correcteurs" destinés chacun à délivrer une valeur dite "d'obscurité" servant dans une correction des valeurs de mesure, le détecteur d'image comportant en outre un circuit dit d'acquisition et de traitement dans lequel sont transférées les valeurs de mesure et les valeurs d'obscurité et dans lequel s'effectue la correction de chacune des valeurs de mesure, est caractérisé en ce que pour au moins une ligne, il consiste à corriger les valeurs de mesure avec au moins deux valeurs de correction différentes.

On tend ainsi, en soumettant les points détecteurs d'une même ligne à des corrections de bruit différentes, à détruire ou en quelque sorte "casser" la corrélation du bruit entre les points détecteurs de la ligne. Il en résulte que l'élaboration des valeurs correctrices n'exige plus, comme dans l'art connu, d'être opérée à l'aide d'un nombre n de points correcteurs suffisant pour respecter la règle du bruit corrélé inférieur à au moins 10 fois le bruit non corrélé.

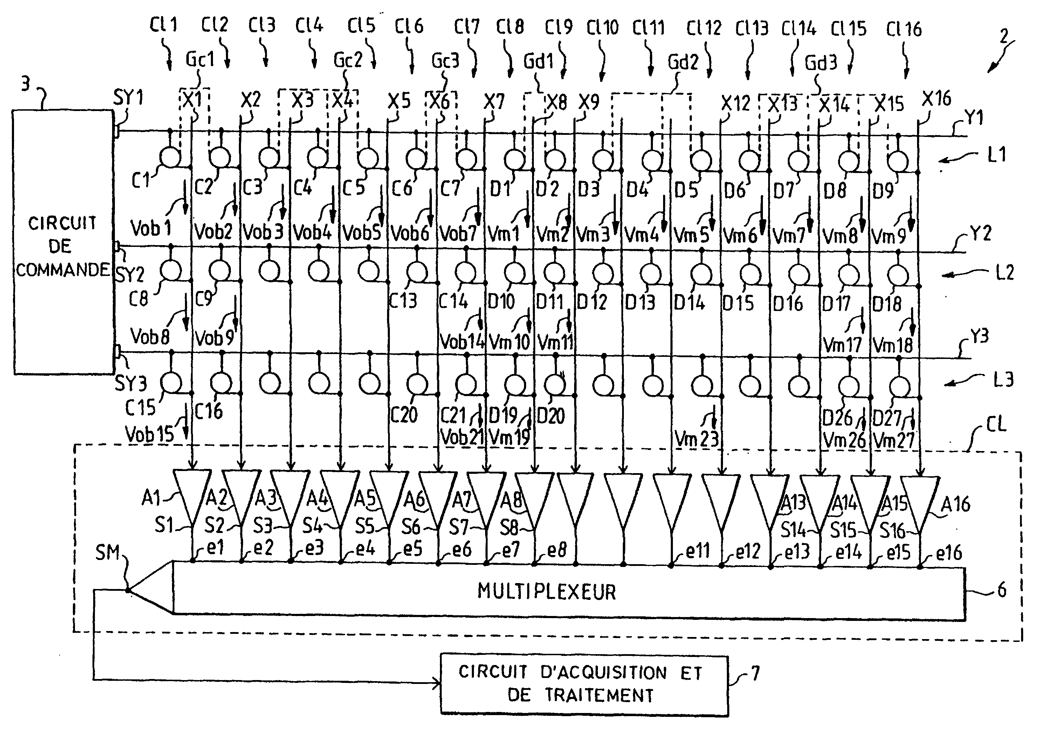

L'invention sera mieux comprise à la lecture de la description qui suit faite, à titre d'exemple non limitatif, en référence à la figure unique annexée qui représente de façon schématique un détecteur d'image permettant la mise en oeuvre du procédé de l'invention.

La figure représente schématiquement un détecteur d'image auquel peut s'appliquer le procédé de l'invention. Le détecteur d'image comporte une matrice photosensible 2, comportant elle même des conducteurs Y1 à Y3 (dits "conducteurs lignes") disposés en lignes, croisés avec des conducteurs X1 à X16 (dits "conducteurs colonnes") disposés en colonnes. A chaque croisement d'un conducteur ligne Y1 à Y3 et d'un conducteur colonne X1 à X16, correspond un point photosensible (repéré soit D1 à D27 soit C1 à C21 suivant sa fonction), connecté de façon classique entre le conducteur ligne et le conducteur colonne. Les points photosensibles D1 à D27, C1 à C21 sont ainsi disposés suivant des lignes L1 à L3 et des colonnes CI1 à CI16.

La constitution précise des points photosensibles D1 à D27, C1 à C21 n'étant pas utile à la compréhension de l'invention, ceux-ci sont symbolisés sur la figure par un cercle ; il est à noter toutefois que ces points photosensibles peuvent être constitués de manière classique, notamment par une photodiode coopérant avec un élément interrupteur du type transistor, ou bien du type diode de commutation comme par exemple décrit dans la demande de brevet français (n° de publication 2.605.166) citée plus haut.

Les points photosensibles D1 à D27, C1 à C21 sont tous identiques, ils sont cependant partagés en deux catégories ayant des fonctions différentes. Les points photosensibles de la première catégorie sont appelés "points détecteurs" D1 à D27, et ils sont destinés à la détection d'une image : ils doivent être exposés chacun à un signal lumineux dont l'intensité est fonction du contenu de l'image, et délivrer chacun une valeur de mesure Vm1 à Vm27 correspondant à cette intensité.

Les points photosensibles de la seconde catégorie sont appelés "points correcteurs" C1 à C21, et ils doivent chacun délivrer une information relative au bruit, appelée valeur d'obscurité Vob1 à Vob21, utilisée pour corriger les valeurs de mesure Vm1 à Vm27 du bruit dont ces dernières sont affectées. A cet effet, il est classique de protéger les points correcteurs C1 à C21 de toute exposition à un signal lumineux, à l'aide par exemple d'un écran opaque (non représenté). Il est alors plus simple de regrouper tous les points correcteurs C1 à C21 d'un même côté de la matrice 2, comme dans l'exemple non limitatif montré à la figure, où dans chaque ligne L1 à L3, 7 points détecteurs C1 à C21 sont tous placés sur la gauche, et sont suivis par 9 points détecteurs D1 à D27.

Dans l'exemple de la figure et pour simplifier cette dernière, seulement 3 conducteurs lignes et 16 conducteurs colonnes sont représentés, mais bien entendu l'invention peut s'appliquer aussi bien dans le cas d'une matrice ayant une capacité beaucoup plus grande ou plus faible. Il est courant par exemple de réaliser des matrices ayant des points photosensibles disposés suivant par exemple environ 2000 lignes et environ 2000 colonnes, ou bien disposés suivant une unique ligne et plusieurs colonnes pour constituer une barrette de détection, ou encore disposé suivant une unique ligne et une unique colonne pour constituer un unique point photosensible.

Le détecteur d'image comporte un circuit de commande 3, dont des sorties SY1, SY2, SY3 sont reliées respectivement aux conducteurs ligne Y1, Y2, Y3. Le circuit de commande 3 comporte différents éléments (non représentés), tels que par exemple, circuit d'horloge, éléments de commutation, registre à décalage, qui lui permettent notamment de réaliser un adressage séquentiel des conducteurs ligne Y1 à Y3.

De façon classique, les conducteurs colonne X1 à X3 sont reliés chacun à un amplificateur intégrateur A1 à A16 appartenant à un circuit de lecture CL. Les sorties S1 à S16 des amplificateurs intégrateur sont reliées aux entrées parallèles e1 à e16 d'un multiplexeur 6, formé par exemple d'un registre à décalage à entrées parallèles et sortie série pouvant être du type C.C.D (abréviation de Charge Coupled Device en anglais, c'est-à-dire dispositif à transfert de charges en français). La sortie Sm du multiplexeur 6 est reliée à un circuit dit "d'acquisition et de traitement" 7, chargé notamment de l'acquisition, du stockage et du traitement des résultats de la lecture des points photosensibles.

Cette disposition classique permet, au cours d'une phase de lecture qui intervient après une phase d'exposition des points détecteurs D1 à D27 à un signal lumineux, de délivrer « en série » et ligne après ligne (L1 à L3), en sortie SM du multiplexeur 6, une série de valeurs d'obscurité Vob1 à Vob21 fournies par les points correcteurs C1 à C21, suivie d'une série de valeurs de mesure Vm1 à Vm27 fournies par les points détecteurs D1 à D27.

Ainsi, en prenant pour exemple la première ligne L1 de points photosensibles, quand cette ligne L1 est adressée, d'une part des valeurs d'obscurité Vob1 à Vob7 délivrées respectivement par les points correcteurs C1 à C7, et d'autre part des valeurs de mesure Vm1 à Vm9 délivrées respectivement par les points détecteurs D1 à D9, sont appliquées aux entrées e1 à e16 du multiplexeur 6. Ce dernier transfère ensuite ces valeurs au circuit d'acquisition 7 sous la forme de signaux de tension délivrés en série, à commencer par exemple par les valeurs d'obscurité depuis la première Vob1 (fournie par le premier point correcteur C1) jusqu'à la septième Vob7 (provenant du septième point correcteur C7) ; cette valeur d'obscurité Vob7 est suivie par les valeurs de mesure, de la première Vm1 jusqu'à la neuvième valeur de mesure Vm9. Un même fonctionnement est répété pour la seconde ligne L2 puis pour la troisième ligne L3.

Quand les valeurs de mesure et de correction d'une ligne L1 à L3 sont transférées dans le circuit d'acquisition 7, ce dernier peut les traiter, notamment pour effectuer une correction du bruit.

Dans l'art antérieur, ainsi que mentionné plus haut, une valeur de correction du bruit Vc est élaborée à partir des valeurs d'obscurité Vob fournies chacune par l'un des n points correcteurs de la ligne. La valeur de correction Vc est obtenue en faisant la moyenne des n valeurs d'obscurité, et la correction du bruit consiste à soustraire cette unique valeur de correction Vc de la valeur de mesure Vm délivrée par chacun des points détecteurs.

Avec le procédé de l'invention, au contraire, la correction du bruit ne s'effectue pas avec une même valeur de correction pour tous les points détecteurs d'une même ligne. La correction du bruit conformément au procédé de l'invention consiste, d'une part à partager les points détecteurs D1 à D27 d'au moins une ligne L1 à L3, en au moins deux groupes appelés groupes détecteurs" Gd1, Gd2 ; elle consiste d'autre part à élaborer au moins deux valeurs de corrections Vc1, Vc2 différentes à partir des n points correcteurs C1 à C21 de cette même ligne ; et elle consiste enfin à corriger les valeurs de mesure provenant des points détecteurs appartenant à l'un des groupes détecteur Gd1, Gd2 par l'une des valeurs de correction Vc1, Vc2, et à corriger les valeurs de mesure provenant des points détecteurs appartenant à l'autre groupe détecteur par l'autre valeur de correction.

Un premier mode de réalisation de l'invention illustré à la première ligne L1 (par des lignes en traits pointillés reliant les points détecteurs et correcteurs d'un même groupe), peut consister à partager les N points détecteurs D1 à D7 de la ligne en un nombre M de groupes détecteurs Gd1, Gd2, Gd3, formés respectivement par des nombres N1, N2, N3 différents de points détecteurs D1 à D7. Dans l'exemple de la figure où pour une clarté suffisante de cette dernière, le nombre de points détecteurs et correcteurs est nécessairement limité : le nombre N total de points détecteurs dans une ligne L1 à L3 étant égal à 7, dans la première ligne L1, le nombre M de groupes détecteurs est égal à 3 et les nombres N1, N2 , N3 de détecteurs dans un groupe égalent respectivement 2, 3 et 4.

Bien entendu en pratique, dans le cas par exemple de lignes comportant un nombre N de points détecteurs de l'ordre de 2.000, le nombre M de groupes détecteurs peut être augmenté afin de détruire suffisamment la corrélation du bruit entre les points détecteurs de la ligne. Des essais ont montré que dans un tel cas, qu'une division de la ligne en environ 10 groupes détecteurs était déjà largement suffisante à "casser" la corrélation pour qu'elle ne soit plus perçue comme gênante pour l'oeil : le nombre des points détecteurs dans ce cas peut être compris par exemple entre 50 et 300 ; ce nombre peut être le même ou non dans tous les groupes détecteurs, et il peut même être différent entre tous les groupes détecteurs.

Dans l'exemple représenté à la première ligne L1, le premier et le deuxième points détecteurs D1, D2 servent à former le premier groupe détecteur Gd1 ; le deuxième groupe détecteur Gd2 est formé par les troisième, quatrième et cinquième points détecteurs D3, D4, D5 ; le troisième groupe détecteur Gd3 est formé par les sixième, septième, huitième et neuvième points détecteurs D6, D7, D8 et D9.

Les n points correcteurs C1 à C7 de la première ligne L1 sont eux aussi partagés en un nombre m de groupes appelés "groupes correcteurs" Gc1, Gc2, Gc3 (m=3 dans l'exemple non limitatif représenté), formés respectivement dans l'exemple non limitatif décrit, par un nombre n1=2, n2=3, n3=2 de points correcteurs.

Il est à observer que cette division en groupes détecteurs et correcteurs des points détecteurs et correcteurs D1 à D9 et C1 à C7, n'est en fait matérialisée en rien au niveau de ces points eux-mêmes, mais qu'elle résulte du traitement des valeurs de mesure Vm1 à Vm27 prévu pour la correction du bruit, traitement qui s'exécute au niveau du circuit d'acquisition et de traitement 7. Par suite, les groupements de ces points tels que représentés à la figure, ne font qu'illustrer la mise en oeuvre du procédé de correction suivant l'invention.

Suivant donc l'exemple illustré par la première ligne L1, ce traitement consiste à faire la moyenne des valeurs d'obscurité Vob1, Vob2 délivrées respectivement par le premier et le deuxième points correcteurs C1, C2 (qui forment un premier groupe correcteur Gc1), pour former avec cette moyenne une première valeur de correction Vc1. Une deuxième valeur de correction Vc2 est obtenue par la moyenne des valeurs d'obscurité Vob3, Vob4, Vob5 délivrées respectivement par les troisième, quatrième et cinquième points correcteurs C3, C4 et C5, qui forment un deuxième groupe correcteur Gc2. Enfin, une troisième valeur de correction Vc3 est obtenue par la moyenne des valeurs d'obscurité Vob6, Vob7, délivrées respectivement par les sixième et septième points correcteurs C6, C7 qui forment un troisième groupe correcteur Gc3. Il est à noter que compte tenu des fluctuations statistiques dont sont affectées chacune des valeurs d'obscurité, les valeurs de correction Vc1 à Vc3 ainsi obtenues pourront être d'autant plus différentes les unes des autres, que sera plus faible le nombre des valeurs d'obscurité à partir duquel elles auront été chacune obtenues.

La première valeur de correction Vc1 est sélectionnée pour la correction des valeurs de mesure provenant des points détecteurs appartenant à un même groupe détecteur, le premier groupe détecteur Gd1 par exemple : cette première valeur de correction sert donc à corriger les valeurs de mesure Vm1 et Vm2 délivrées par les points détecteurs D1, D2. Il en est de même pour les valeurs de mesure Vm3, Vm4, Vm5 provenant du deuxième groupe détecteur Gd2, lesquelles sont corrigées par la deuxième valeur de correction Vc2, et il en est de même pour les valeurs de mesure Vm6 à Vm9, provenant du troisième groupe détecteur Gd3 et qui sont corrigées par la troisième valeur de correction Vc3.

On peut ainsi dans la pratique, réduire notablement par rapport à l'art antérieur, à 20 par exemple, le nombre des points détecteurs qui dans une ligne sont nécessaires à la correction du bruit. Dans l'exemple illustré à la première ligne L1 en effet, à chaque groupe détecteur Gd1 à Gd3 correspond un groupe correcteur Gc1 à Gc3, et si l'on appliquait cet exemple au cas ci-dessus cité dans lequel les points détecteurs d'une ligne sont partagés en 10 groupes détecteurs, il faudrait également constituer 10 groupes correcteurs : en supposant alors que chaque groupe correcteur soit formé par 2 points détecteurs, il faudrait que la ligne comporte 20 points détecteurs. Ceci est à comparer, pour une même perception optique par l'oeil, avec les 100 points détecteurs qui, dans l'art antérieur, sont nécessaires dans une ligne pour corriger le bruit.

Bien entendu, le fait que les valeurs de correction Vc1 à VC3 soient obtenues avec des nombres n1, n2, n3 de points correcteurs inférieurs au nombre n de ces points correcteurs présents dans une ligne L1 à L3, augmente un peu le niveau de bruit injecté dans la matrice 2 et crée donc un bruit additionnel. Pour cette raison il peut être préférable (mais non obligatoire) d'utiliser au moins 2 points correcteurs C1 à C21 par groupe correcteur Gc1 à Gc3, plutôt qu'un seul ; cependant même un unique point correcteur pour former un groupe correcteur reste une solution intéressante, car ce bruit additionnel n'étant plus corrélé, son effet ne s'ajoute que de manière quadratique, et il est dans la plus part des cas négligeable.

Un groupe correcteur Gc1 à Gc3 peut aussi servir à corriger les valeurs fournies par deux ou plus groupes détecteurs Gd1 à Gd3, ce qui permet soit de réduire encore le nombre des points correcteurs C1 à C21 dans chaque ligne L1 à L3, soit d'augmenter le nombre n1, n2, n3 de ces points correcteurs à l'intérieur de chacun des groupes correcteurs Gc1 à Gc3, ou seulement de certains de ces groupes. En fait il n'est pas obligatoire que les différents groupes correcteurs Gc1 à Gc3 soit formés par un même nombre n1, n2, n3 de points correcteurs, l'un au moins de ces groupes peut en comporter un nombre n2 différents des autres, comme le groupe Gc2 dans l'exemple illustré à la première ligne L1 ; c'est à dire que le nornbre de points correcteurs C1 à C7 dans un groupe correcteur Gc1 à Gc3, peut être de 1 ou plus, et que ce nombre peut être le même ou non dans tous les groupes correcteurs d'une ligne, ou encore être différent entre tous les groupes correcteurs d'une ligne.

La correction du bruit expliquée ci-dessus en référence à la première ligne L1, peut s'appliquer d'une même manière aux autres lignes L2, L3. Mais il est possible également d'introduire une ou des variantes d'une ligne à l'autre. Par exemple la sélection de l'un des groupes correcteurs Gc1 à Gc3 pour corriger l'un quelconque des groupes détecteurs Gd1 à Gd3, peut être rendue aléatoire dans une ligne et/ou de ligne à ligne L1 à L3.

Dans l'exemple montré à la première ligne L1, les groupes détecteurs Gd1 à Gd3 forment des blocs distincts, mais il est possible également d'imbriquer les groupes détecteurs, c'est à dire de mêler un ou plusieurs points détecteurs appartenant à un groupe détecteur donné, à des points détecteurs appartenant à un ou plusieurs autres groupes détecteurs. Dans un tel cas, en considérant la deuxième ligne L2 par exemple, le point détecteur D13 (situé dans la colonne CI11) pourrait appartenir à un groupe détecteur différent de celui auquel appartiennent les points détecteurs D12 et D14 situés immédiatement sur chacun de ses côtés.

Une autre variante efficace peut consister par exemple à rendre variable de ligne à ligne L1 à L3, la valeur du nombre M de groupes détecteurs et/ou du nombre m de groupes correcteurs.

Enfin une autre variante consiste à faire varier, ou à modifier la répartition du nombre des points détecteurs D1 à D27 dans les groupes détecteurs Gd1 à Gd3, de ligne à ligne L1 à L3.

## Revendications

**1.** Procédé de correction du niveau de bruit dans un détecteur d'images comportant une matrice (2) de points photosensibles (D1 à D27, C1 à C21) agencés en au moins une ligne (L1 à L3) et en au moins une colonne (CI1 à CI16), les points photosensibles étant dans chaque ligne (L1 à L3) partagés, d'une part en des points dits "détecteurs" (D1 à D27) destinés chacun à être exposés à une information lumineuse et à délivrer une valeur de mesure (Vm1 à Vm9) qui est fonction de l'intensité de l'information lumineuse, et partagés d'autre part en des points dits "correcteurs" (C1 à C21) protégés de toute exposition à une information lumineuse, destinés chacun à délivrer une valeur dite "d'obscurité" (Vob1 à Vob7) servant dans une correction des valeurs de mesure (Vm1 à Vm9), le détecteur d'image (1) comportant en outre un circuit dit d'acquisition et de traitement (7) dans lequel sont transférées les valeurs de mesure (Vm1 à Vm9) et les valeurs d'obscurité (Vob1 à Vob7) et dans lequel s'effectue la correction de chacune des valeurs de mesure (Vm1 à Vm9), le procédé étant **caractérisé en ce que** dans au moins une ligne (L1 à L3), il consiste d'une part à partager les points détecteurs (D1 à D9) en un nombre (M) supérieur ou égal à deux de groupes détecteurs (Gd1 à Gd3) et d'autre part à partager les points correcteurs (C1 à C7) en un nombre (m) supérieur ou égal à deux de groupes correcteurs (Gc1 à Gc3) servant chacun à élaborer une valeur de correction (Vc1 à Vc3) à partir des valeurs d'obscurité (Vob1 à Vob7) délivrées par leurs points correcteurs (C1 à C7) et **en ce qu'**il consiste à corriger les valeurs de mesure (Vm1 à Vm9) délivrées par les points détecteurs (D1 à D9) avec une valeur de correction (Vc1 à Vc3) sélectionnée en fonction du groupe détecteur (Gd1 à Gd3) auquel appartient le point détecteur (D1 à D9) délivrant la valeur de mesure (Vm1 à Vm9) à corriger, au moins deux valeurs de correction (Vc1 Vc2) différentes servant dans la correction.

**2.** Procédé de correction suivant la revendication 1, **caractérisé en ce qu'**il consiste à partager les points correcteurs (C1 à C7) en un même nombre (m) de groupes correcteurs (Gc1 à Gc3) que le nombre (M) de groupes détecteurs (Gd1 à Gd3).

**3.** Procédé de correction suivant l'une des revendications 1 ou 2, **caractérisé en ce qu'**il consiste à utiliser une même valeur de correction (Vc1 à Vc3) pour corriger les valeurs de mesure (Vm1 à Vm9) d'au moins deux groupes détecteurs (Gd1 à Gd3) différents.

**4.** Procédé de correction suivant l'une quelconque des revendications 1 à 3, **caractérisé en ce que** les groupes correcteurs (Gc1 à Gc3) comportent tous un même nombre de points correcteurs (C1 à C7).

**5.** Procédé de correction suivant l'une quelconque des revendications 1 à 3, **caractérisé en ce que** au moins deux groupes correcteurs (Gc1 à Gc3) comportent un nombre différent de points correcteurs (C1 à C7).

**6.** Procédé de correction suivant l'une quelconque des revendications 1 à 5, **caractérisé en ce que** au moins un groupe correcteur (Gc1 à Gc3) est formé par un unique point correcteur (C1 à C7).

**7.** Procédé de correction suivant l'une des revendications précédentes, **caractérisé en ce qu'**il consiste à partager les points détecteurs (D1 à D9) d'une même ligne (L1 à L3), en des groupes détecteurs (Gd1 à Gd3) ayant tous un même nombre de points détecteurs (D1 à D9).

**8.** Procédé de correction suivant l'une quelconque des revendications 1 à 6, **caractérisé en ce que** au moins deux grouper détecteurs (Gd1 à Gd3) comportent un nombre différent de points détecteurs (D1 à D9).

**9.** Procédé de correction suivant l'une quelconque des revendications 1 à 8, **caractérisé en ce que** au moins un point détecteur (D1 à D9) d'un groupe détecteur (Gd1 à Gd3) est mêlé à des points détecteurs appartenant à au moins un autre groupe détecteur.

**10.** Procédé de correction suivant l'une quelconque des revendications 1 à 9, **caractérisé en ce que** au moins deux lignes (L1 à L3) comportent des groupes détecteurs (Gd1 à Gd3) en nombre différents.

**11.** Procédé de correction suivant l'une quelconque des revendications 1 à 10, **caractérisé en ce que** entre au moins deux lignes (L1 à L3), les groupes détecteurs (Gd1 à Gd3) comportent des points détecteurs (D1 à D9) en nombres différents.

**12.** Procédé de correction suivant l'une quelconque des revendications 1 à 11, **caractérisé en ce qu'**il consiste à corriger au moins une des valeurs de mesure (Vm1 à Vm9) avec une valeur de correction (Vc1 à Vc3) sélectionnée d'une manière aléatoire parmi les différentes valeurs de correction.

**Claims**

**1.** Process for correcting noise level in an image detector comprising a matrix (2) of photosensitive points (D1 to D27, C1 to C21) arranged in at least one row (L1 to L3) and in at least one column (Cl1 to Cl16), the photosensitive points being in each row (L1 to L3) distributed, on the one hand into so-called "detector" points (D1 to D27) each intended to be exposed to a luminous cue and to deliver a measurement value (Vm1 to Vm9) which is dependent on the intensity of the luminous cue, and distributed on the other hand into so-called "corrector" points (C1 to C21) protected from any exposure to a luminous cue, each intended to deliver a so-called "dark" value (Vdk1 to Vdk7) serving in a correction of the measurement values (Vm1 to Vm9), the image detector (1) furthermore comprising a so-called acquisition and processing circuit (7) into which are transferred the measurement values (Vm1 to Vm9) and the dark values (Vdk1 to Vdk7) and in which is performed the correction of each of the measurement values (Vm1 to Vm9), the process being **characterized in that** within at least one row (L1 to L3), it consists on the one hand in distributing the detector points (D1 to D9) into a number (M) greater than or equal to two of detector groups (Gd1 to Gd3) and on the other hand in distributing the corrector points (C1 to C7) into a number (m) greater than or equal to two of corrector groups (Gc1 to Gc3) each serving to formulate a correction value (Vc1 to Vc3) on the basis of the dark values (Vdk1 to Vdk7) delivered by their corrector points (C1 to C7) and **in that** it consists in correcting the measurement values (Vm1 to Vm9) delivered by the detector points (D1 to D9) with a correction value (Vc1 to Vc3) selected as a function of the detector group (Gd1 to Gd3) to which the detector point (D1 to D9) delivering the measurement value (Vm1 to Vm9) to be corrected belongs, at least two different correction values (Vc1, Vc2) serving in the correction.

**2.** Correction process according to Claim 1, **characterized in that** it consists in distributing the corrector points (C1 to C7) into one and the same number (m) of corrector groups (Gc1 to Gc3) as the number (M) of detector groups (Gd1 to Gd3).

**3.** Correction process according to one of Claims 1 or 2, **characterized in that** it consists in using one and the same correction value (Vc1 to Vc3) to correct the measurement values (Vm1 to Vm9) of at least two different detector groups (Gd1 to Gd3).

**4.** Correction process according to any one of Claims 1 to 3, **characterized in that** the corrector groups (Gc1 to Gc3) all comprise one and the same number of corrector points (C1 to C7).

**5.** Correction process according to any one of Claims 1 to 3, **characterized in that** at least two corrector groups (Gc1 to Gc3) comprise a different number of corrector points (C1 to C7).

**6.** Correction process according to any one of Claims 1 to 5, **characterized in that** at least one corrector group (Gc1 to Gc3) is formed of a single corrector point (C1 to C7).

**7.** Correction process according to one of the preceding claims, **characterized in that** it consists in distributing the detector points (D1 to D9) of one and the same row (L1 to L3) into detector groups (Gd1 to Gd3) all having one and the same number of detector points (D1 to D9).

**8.** Correction process according to one of Claims 1 to 6, **characterized in that** at least two detector groups (Gd1 to Gd3) comprise a different number of detector points (D1 to D9).

**9.** Correction process according to one of Claims 1 to 8, **characterized in that** at least one detector point (D1 to D9) of a detector group (Gd1 to Gd3) is mingled with detector points belonging to at least one other detector group.

**10.** Correction process according to one of Claims 1 to 9, **characterized in that** at least two rows (L1 to L3) comprise detector groups (Gd1 to Gd3) in different number.

**11.** Correction process according to one of Claims 1 to 10, **characterized in that** between at least two rows (L1 to L3), the detector groups (Gd1 to Gd3) comprise detector points (D1 to D9) in different numbers.

**12.** Correction process according to one of Claims 1 to 11, **characterized in that** it consists in correcting at least one of the measurement values (Vm1 to Vm9) with a correction value (Vc1 to Vc3) selected in a random manner from among the various correction values.

**Patentansprüche**

**1.** Verfahren zur Korrektur des Rauschpegels in einem Bilddetektor, der eine Matrix (2) von lichtempfindlichen Punkten (D1 bis D27, C1 bis C21) enthält, die entlang mindestens einer Zeile (L1 bis L3) und mindestens einer Spalte (Cl1 bis Cl16) angeordnet sind, wobei die lichtempfindlichen Punkte in jeder Zeile (L1 bis L3) einerseits in Detektorpunkte (D1 bis D27), die je einer Lichtinformation ausgesetzt werden und einen Meßwert (Vm1 bis Vm9) abhängig von der Lichtstärke der Lichtinformation liefern sollen, und andrerseits in Korrekturpunkte (C1 bis C21) aufgeteilt sind, die gegen jeden Einfall einer Lichtinformation geschützt sind und je einen Dunkelwert (Vob1 bis Vob7) liefern sollen, der der Korrektur der Meßwerte (Vm1 bis Vm9) dient, wobei der Bilddetektor (1) weiter eine Erfassungs- und Verarbeitungsschaltung (7) enthält, in die die Meßwerte (Vm1 bis Vm9) und die Dunkelwerte (Vob1 bis Vob7) transferiert werden und in der die Korrektur der Meßwerte (Vm1 bis Vm9) erfolgt, **dadurch gekennzeichnet, daß** das Verfahren in mindestens einer Zeile (L1 bis L3) darin besteht, einerseits die Detektorpunkte (D1 bis D9) in eine Anzahl (M) größer oder gleich zwei von Detektorgruppen (Gd1 bis Gd3) und andrerseits die Korrekturpunkte (C1 bis C7) in eine Anzahl (m) größer oder gleich zwei von Korrekturgruppen (Gc1 bis Gc3) aufzuteilen, die je zur Erarbeitung eines Korrekturwerts (Vc1 bis Vc3) ausgehend von den Dunkelwerten (Vob1 bis Vob7) dienen, die von den Korrekturpunkten (C1 bis C7) geliefert werden, und daß das Verfahren weiter darin besteht, die Meßwerte (Vm1 bis Vm9), die von den Detektorpunkten (D1 bis D9) geliefert werden, mit einem Korrekturwert (Vc1 bis Vc3) zu korrigieren, der abhängig von der Detektorgruppe (Gd1 bis Gd3) ausgewählt wird, zu der der Detektorpunkt (D1 bis D9) gehört, der den zu korrigierenden Meßwert (Vm1 bis Vm9) liefert, wobei mindestens zwei unterschiedliche Korrekturwerte (Vc1 bis Vc2) zur Korrektur dienen.

**2.** Korrekturverfahren nach Anspruch 1, **dadurch gekennzeichnet, daß** es darin besteht, die Korrekturpunkte (C1 bis C7) in eine gleiche Anzahl (m) von Korrekturgruppen (Gc1 bis Gc3) wie die Anzahl (M) von Detektorgruppen (Gd1 bis Gd3) aufzuteilen.

**3.** Korrekturverfahren nach einem der Ansprüche 1 und 2, **dadurch gekennzeichnet, daß** es darin besteht, einen gleichen Korrekturwert (Vc1 bis Vc3) zur Korrektur der Meßwerte (Vm1 bis Vm9) mindestens zweier unterschiedlicher Detektorgruppen (Gd1 bis Gd3) zu verwenden.

**4.** Korrekturverfahren nach einem beliebigen der Ansprüche 1 bis 3, **dadurch gekennzeichnet, daß** die Korrekturgruppen (Gc1 bis Gc3) alle die gleiche Anzahl von Korrekturpunkten (C1 bis C7) besitzen.

**5.** Korrekturverfahren nach einem beliebigen der Ansprüche 1 bis 3, **dadurch gekennzeichnet, daß** mindestens zwei Korrekturgruppen (Gc1 bis Gc3) eine unterschiedliche Anzahl von Korrekturpunkten (C1 bis C7) enthalten.

**6.** Korrekturverfahren nach einem beliebigen der Ansprüche 1 bis 5, **dadurch gekennzeichnet, daß** mindestens eine Korrekturgruppe (Gc1 bis Gc3) von einem einzigen Korrekturpunkt (C1 bis C7) gebildet wird.

**7.** Korrekturverfahren nach einem der vorstehenden Ansprüche, **dadurch gekennzeichnet, daß** es darin besteht, die Detektorpunkte (D1 bis D9) einer gemeinsamen Zeile (L1 bis L3) in Detektorgruppen (Gd1 bis Gd3) aufzuteilen, die alle die gleiche Anzahl von Detektorpunkten (D1 bis D9) enthalten.

**8.** Korrekturverfahren nach einem beliebigen der Ansprüche 1 bis 6, **dadurch gekennzeichnet, daß** mindestens zwei Detektorgruppen (Gd1 bis Gd3) eine unterschiedliche Anzahl von Detektorpunkten (D1 bis D9) enthalten.

**9.** Korrekturverfahren nach einem beliebigen der Ansprüche 1 bis 8, **dadurch gekennzeichnet, daß** mindestens ein Detektorpunkt (D1 bis D9) einer Detektorgruppe (Gd1 bis Gd3) mit Detektorpunkten vermischt ist, die zu mindestens zu einer anderen Detektorgruppe gehören.

**10.** Korrekturverfahren nach einem beliebigen der Ansprüche 1 bis 9, **dadurch gekennzeichnet, daß** mindestens zwei Zeilen (L1 bis L3) unterschiedliche Anzahlen von Detektorgruppen (Gd1 bis Gd3) enthalten.

11. Korrekturverfahren nach einem beliebigen der Ansprüche 1 bis 10, **dadurch gekennzeichnet, daß** zwischen mindestens zwei Zeilen (L1 bis L3) die Detektorgruppen (Gd1 bis Gd3) eine unterschiedliche Anzahl von Detektorpunkten (D1 bis D9) enthalten.

12. Korrekturverfahren nach einem beliebigen der Ansprüche 1 bis 11, **dadurch gekennzeichnet, daß** es darin besteht, mindestens einen Meßwert (Vm1 bis Vm9) mit einem Korrekturwert (Vc1 bis Vc3) zu korrigieren, der zufällig unter den verschiedenen Korrekturwerten ausgewählt wird.

CIRCUIT DE COMMANDE

MULTIPLEXEUR

CIRCUIT D'ACQUISITION ET DE TRAITEMENT